# EUROPEAN PATENT APPLICATION

(11) **EP 2 963 327 A1**
(43) Date of publication of application: **06.01.2016**
(21) Application number: 14757549.2
(22) Date of filing: 27.02.2014
(51) Int. Cl.: F16L 59/04, C01B 33/158, C01B 33/18

(54) **HEAT-INSULATING MOLDING COMPOUND, HEAT-INSULATING MOLDED ARTICLE, AND PRODUCTION METHOD FOR SAME**

(30) Priority: 01.03.2013 JP 2013041081
(71) Applicant: Panasonic Intellectual Property Management Co., Ltd., Osaka-shi, Osaka 540-6207 (JP)
(72) Inventor: HIDAKA, Yasuhiro, Osaka-shi, Osaka 540-6207 (JP); SHIBATA, Tetsuji, Osaka-shi, Osaka 540-6207 (JP); HOSOI, Kenta, Osaka-shi, Osaka 540-6207 (JP); ANDO, Hideyuki, Osaka-shi, Osaka 540-6207 (JP); KUGIMIYA, Kazuma, Osaka-shi, Osaka 540-6207 (JP); IKOMA, Yoshimitsu, Osaka-shi, Osaka 540-6207 (JP)
(74) Representative: Müller-Boré & Partner Patentanwälte PartG mbB
(86) International application number: PCT/JP2014/001072
(87) International publication number: WO 2014/132655

(57) **Abstract**

Provided is a heat-insulating molding compound from which a heat-insulating molded article having high strength and excellent thermal insulating properties can be produced. The compound is formed by crushing an aerogel particle A coated with an adhesive 4.

## Description

### TECHNICAL FIELD

The invention relates to a heat-insulating molding compound and a heat-insulating molded article based on aerogel particles, and a production method for the same.

### BACKGROUND ART

As thermal insulators, there have been known foam materials such as urethane foam and phenolic foam (foam-based thermal insulator). The foam materials exert the thermal insulating properties derived from their air bubbles generated by foaming. However, such urethane foam and phenolic foam typically have thermal conductivities higher than the thermal conductivities of the air. It is therefore of advantage to make the thermal conductivities of the thermal insulator less than that of the air, for further improving the thermal insulating properties. As methods for achieving such thermal conductivities that are less than that of the air, there has been known a method of filling air-gaps of the foamed material (such as urethane foam and phenolic foam) with a gas having low thermal conductivities (e.g., chlorofluorocarbon), or the like. However, the method of filling air-gaps with the gas has a concern that the filled gas possibly leaks from the air-gaps over time, and which possibly causes increase in the thermal conductivities.

In recent years, there have been proposed vacuum-based methods for improving the thermal insulating properties. In the methods, for example, porous materials of calcium silicate and/or glass fibers are used and they are maintained at vacuum state of about 10 Pa. However, the vacuum-based thermal insulating methods require the maintenance of the vacuum state, and thus have problems in temporal deterioration and production cost. Moreover, in the thermal insulator based on the vacuum, the shape of the thermal insulator would be restricted because it needs to maintain the vacuum state, and its application field is thus severely limited. Because of these reasons, the thermal insulator based on the vacuum has been limited in practical use.

Incidentally there has been known a mass of fine porous silica (so-called aerogel) as a material for a thermal insulator that exerts the thermal conductivities lower than that of the air under ordinary pressure. This material can be obtained based on methods disclosed in US4402927, US4432956, and US4610863, for example. According to these methods, silica aerogel can be produced by using alkoxysilane (which is also called "silicon alkoxide" and "alkyl silicate") as raw material. Specifically, the silica aerogel can be obtained by: hydrolyzing the alkoxysilane under presence of solvent to produce wet gelled compound having silica skeleton as a result of condensation polymerization; and drying the wet gelled compound under supercritical condition, which is no less than a critical point, of the solvent. As the solvent, alcohol, liquefied carbon dioxide, and the like may be used, for example. Aerogel particles, which are particulate materials of the aerogel, have the thermal conductivities lower than that of the air, and thus are useful as raw materials for a thermal insulator.

### CITATION LIST

### PATENT LITERATURE

Patent Literature 1: US4402927
Patent Literature 2: US4432956
Patent Literature 3: US4610863

### SUMMARY OF INVENTION

### TECHNICAL PROBLEM

However, since the aerogel particles are very lightweight, poor in strength and brittle, handling of the aerogel particles is difficult. Further, since the aerogel particles themselves are brittle, a body of a thermal insulator formed by molding the aerogel particles has a poor strength and is liable to crack and be broken. To increase the strength of the thermal insulator, it may be possible to add reinforcing material or the like or to increase the amount of adhesive, but in this case, the added reinforcing material or the increased amount of adhesive possibly causes decrease in the thermal insulating properties of the thermal insulator. In view of the above circumstances, there is a demand of the thermal insulator that achieves both requirements of sufficient strength and thermal insulating properties by increasing the strength of the aerogel particles and its molded products while preventing decrease in thermal insulating properties.

The present invention has been made in view of the above circumstances, and an object thereof is to propose a heat-insulating molding compound for producing a heat-insulating molded article which is higher in strength and is excellent in thermal insulating properties, a heat-insulating molded article which is higher in strength and is excellent in thermal insulating properties, and a production method for such a heat-insulating molded article.

### SOLUTION TO PROBLEM

A piece of a heat-insulating molding compound according to the present invention is prepared by crushing an aerogel particle coated with adhesive.

A heat-insulating molded article according to the present invention is molded from pieces of the heat-insulating molding compound.

A production method for a heat-insulating molded article according to the present invention includes coating aerogel particles with adhesive to prepare coated aerogel particles, crushing the coated aerogel particles to obtain pieces of a heat-insulating molding compound, and molding the pieces of the heat-insulating molding compound.

### ADVANTAGEOUS EFFECTS OF INVENTION

According to the present invention, it is possible to obtain a heat-insulating molded article which is higher in strength and is excellent in thermal insulating properties.

### BRIEF DESCRIPTION OF DRAWINGS

FIG. 1A is a schematic diagram illustrating a step of an example of a method for producing a piece of a heat-insulating molding compound;
FIG. 1B is a schematic diagram illustrating another step of the example of the method for producing the piece of the heat-insulating molding compound;
FIG. 1C is a schematic diagram illustrating another step of the example of the method for producing the piece of the heat-insulating molding compound;
FIG. 1D is an enlarged schematic diagram illustrating an inside of a heat-insulating molded article;
FIG. 2A is a schematic diagram illustrating a step of an example of a method for molding a heat-insulating molded article;
FIG. 2B is a schematic diagram illustrating another step of the example of the method for molding the heat-insulating molded article;
FIG. 2C is a schematic diagram illustrating another step of the example of the method for molding the heat-insulating molded article;
FIG. 2D is a schematic diagram illustrating another step of the example of the method for molding the heat-insulating molded article;
FIG. 3A is a schematic diagram of an example of an aerogel particle;
FIG. 3B is a schematic diagram of another example of an aerogel particle;
FIG. 3C is a schematic diagram of another example of an aerogel particle; and
FIG. 4 is an electron micrograph of an aerogel particle.

### DESCRIPTION OF EMBODIMENTS

Embodiments of the present invention will hereinafter be described.

Aerogel is a porous material (porous body) and is obtained by drying a gel so as to substitute the solvent included in the gel for a gas. Particulate material of the aerogel is called aerogel particle. Known examples of the aerogel include silica aerogel, carbon aerogel, and alumina aerogel, and the silica aerogel is preferably used among them. The silica aerogel is excellent in thermal insulating properties, is easy to produce, and is low in producing cost, and thus is easy to obtain compared to other kind of aerogels. Note that, materials which are produced as a result of full evaporation of solvent in gel and have mesh structures with air gaps may be called "xerogel", but the aerogel of the present specification may include the xerogel.

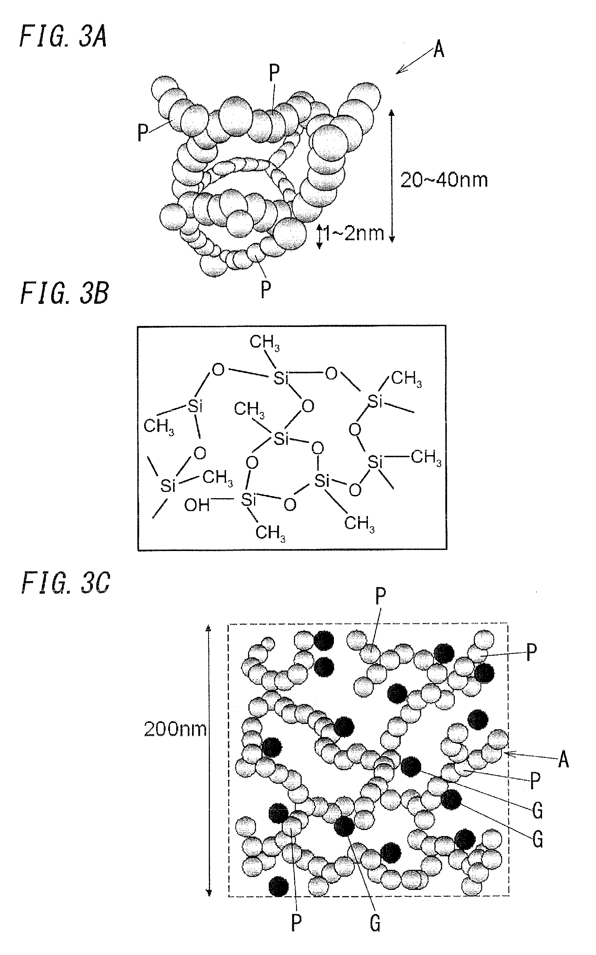

FIGS. 3A to 3C show schematic diagrams of an example of the aerogel particle **A.** As shown in FIGS. 3A and 3B, the aerogel particle **A** is a silica aerogel particle, and is a silica (SiO₂) structure having pores of which size being about 10s nanometers (in a range of 20 to 40 nm, for example). Such aerogel particles **A** can be obtained by a supercritical drying or the like. An aerogel particle **A** is constituted by fine particles **P** (silica microparticles) that are bound to each other so as to form a three dimensional mesh shape. Size of one silica microparticle is, for example, about 1 to 2 nm. As shown in FIG. 3C, gases **G** are allowed to enter the pores, of which sizes are about 10s nanometers, of the aerogel particle **A**. These pores block the transfer of the components of the air such as nitrogen and oxygen, and accordingly it is possible to reduce the thermal conductivities to the extent less than that of the air. For example, a conventional thermal insulator provided with the air has a thermal conductivity (WLF) λ of 35 to 45 mW/m·K, but a thermal conductivity (WLF) λ of a thermal insulator can be reduced to about 9 to 12 mW/m·K by the aerogel particles **A.** Typically, aerogel particles **A** have hydrophobic properties. For example, in the silica aerogel particle shown in FIG. 3B, most of silicon atoms (Si) are bound to alkyl group(s) (methyl group, CH₃), and a small number of them are bound to hydroxyl group(s) (OH). This particle therefore has a comparatively low surface polarity.

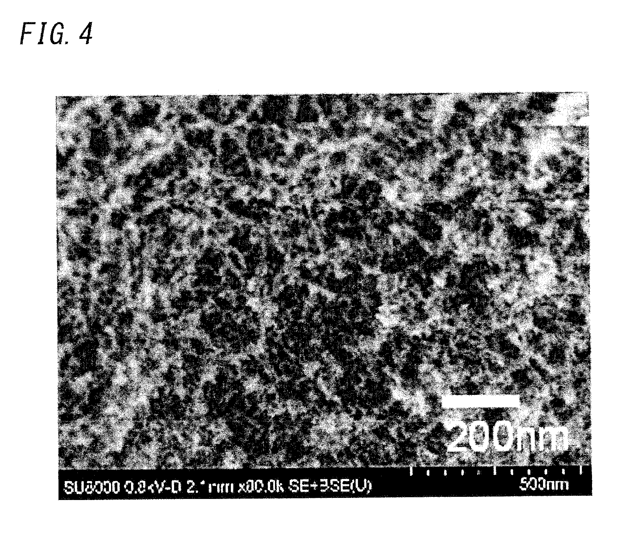

FIG. 4 is an electron micrograph of a silica aerogel particle. This silica aerogel particle was obtained by a supercritical drying method. It is conceivable from this graph that a silica aerogel particle has a three-dimensional steric mesh structure. The mesh structure of an aerogel particle **A** is typically formed of linearly bound silica microparticles having a size of less than 10 nm. Note that, the mesh structure may have ambiguous boundaries between microparticles **P,** and some part of the mesh structure may be formed of linearly extended silica structures (-O-Si-O-).

The aerogel particles **A** for the heat-insulating molded article are not limited particularly, and it is possible to use the aerogel particles obtained by a commonly-used producing method. Typical examples of the aerogel particles include: aerogel particles **A** obtained by the supercritical drying method; and aerogel particles **A** obtained based on liquid glass.

The aerogel particles obtained by the supercritical drying method can be obtained by: preparing silica particles by polymerizing raw material by the sol-gel method which is a liquid phase reaction method; and removing the solvent thereof by the supercritical drying. For example, alkoxysilane (which is also called "silicon alkoxide" or "alkyl silicate") is used as the raw material. The alkoxysilane is hydrolyzed under presence of solvent to generate a wet gelled compound having silica skeleton as a result of condensation polymerization, and thereafter the wet gelled compound is dried under supercritical condition in which a temperature and a pressure are equal to or more than those of a critical point of the solvent. The solvent may be alcohol, liquefied carbon dioxide or the like. According to the drying of the gel compound under the supercritical condition, the solvent thereof is removed while the mesh structure of the gel is maintained, and as a result the aerogel can be obtained. Aerogel particles **A**, which are particulate materials of the aerogel, can be obtained by pulverizing the solvent-including gel into particles, and thereafter drying the particles of the solvent-including gel by the supercritical drying. Alternatively, aerogel particles **A** can be obtained by pulverizing a bulk body of aerogel obtained as a result of the supercritical drying.

The alkoxysilane as the raw material of the aerogel particles **A** is not limited particularly, but may be bifunctional axkoxysilane, trifunctional axkoxysilane, tetrafunctional axkoxysilane, or a combination of them. Examples of the bifunctional alkoxysilane include dimethyldimethoxysilane, dimethyldiethoxysilane, diphenyldiethoxysilane, diphenyldimethoxysilane, methylphenyldiethoxysilane, methylphenyldimethoxysilane, diethyldiethoxysilane, and diethyldimethoxysilane. Examples of the trifunctional alkoxysilane include methyltrimethoxysilane, methyltriethoxysilane, ethyltrimethoxysilane, ethyltriethoxysilane, phenyltrimethoxysilane, and phenyltriethoxysilane. Examples of the tetrafunctional alkoxysilane include tetramethoxysilane, and tetraethoxysilane. Bis(trimethylsilyl)methane, bis(trimethylsilyl)ethane, bis(trimethylsilyl)hexane, or vinyltrimethoxysilane may be used as the alkoxysilane. Partial hydrolysate of the alkoxysilane may be used as the raw material.

The hydrolysis and the condensation polymerization of the alkoxysilane are preferably performed under presence of water, and more preferably performed under presence of a mixed liquid of water and organic solvent which the alkoxysilane is soluble in and is compatible with water. Use of such a mixed liquid as the solvent makes it possible to perform the hydrolysis process and the condensation polymerization process in succession, and accordingly the gel can be obtained efficiently. In this process, the polymer is generated as a gelled substance (wet gel) exists in the solvent as dispersion medium. The solvent which the alkoxysilane is soluble in and is compatible with water is not limited particularly. Examples of such a solvent include: alcohol such as methanol, ethanol, propanol, isopropanol and butanol; acetone; and N,N-dimethylformamide. These materials may be used alone or in combination.

It is also preferable that the hydrolysis and the condensation polymerization of the alkoxysilane be performed under presence of catalyst which causes to desorb the alkoxy group from the alkoxysilane to facilitate the condensation reaction. Examples of such a catalyst include acidic catalyst and basic catalyst. Specifically, examples of the acidic catalyst include hydrochloric acid, citric acid, nitric acid, sulfuric acid, and ammonium fluoride. Examples of the basic catalyst include ammonia and piperidine.

An appropriate component may be added to the reaction solution of the alkoxysilane. Examples of such a component may include a surface-activating agent and a functional group induction agent. Such an additional component can provide a favorable function on the aerogel particles **A.**

The aerogel can be obtained by drying the obtained wet gel by the supercritical drying. It is preferable that the wet gel be firstly cut or pulverized into particles to prepare the particles of the solvent including-gel, and thereafter the particles of the gel be dried by the supercritical drying. By doing so, the aerogel can be made into particles and dried without fracturing aerogel structure, and accordingly aerogel particles **A** can be obtained easily. In this case, it is preferable to prepare the particles of gel in uniform size, and which enables the aerogel particles **A** to be equalized in size. Alternatively, the aerogel particles **A** may be obtained by preparing a bulk aerogel, and thereafter pulverizing the bulk body of aerogel by a pulverizing device. The obtained aerogel particles **A** may be sieved or classified so as to give aerogel particles with more equal sizes. When sizes of aerogel particles **A** are equalized, handleability can be improved and it is possible to easily produce a stable product.

The aerogel particles **A** obtained based on the liquid glass can be produced by an ordinary pressure drying method that includes sequential processes of a preparation process of silica sol, a gelling process of the silica sol, a ripening process, a pulverizing process of the gel, a solvent substitution process, a hydrophobizing process and a drying process. The liquid glass generally may be a high concentration aqueous solution of mineral silicate such as sodium silicate, and can be obtained by dissolving the mineral silicate in the water and heating it, for example.

The raw material of the silica sol may be silicate alkoxide, silicate of alkaline metal, or the like. Examples of the silicate alkoxide include tetramethoxysilane and tetraethoxysilane. The alkoxysilane described in the explanation regarding the supercritical drying method can be used as the silicate alkoxide. The silicate of alkaline metal may be potassium silicate, sodium silicate or the like. It is preferable to use the silicate of alkaline metal because it is inexpensive, and it is more preferable to use the sodium silicate because it is easily available.

In a case of using the silicate of alkaline metal, silica sol can be prepared by a method using a deacidification with an inorganic acid such as hydrochloric acid and sulfuric acid, or a method using a cation exchange resin having counter ion of H⁺. Among these methods, it is preferable to use a cation exchange resin.

The silica sol can be prepared by using an acid type cation exchange resin by passing a solution of silicate of alkaline metal having a proper concentration through a packed layer filled with the cation exchange resin. Alternatively, the silica sol can be prepared by: introducing a cation exchange resin into a solution of silicate of alkaline metal; mixing them; removing the alkaline metal; and thereafter removing the cation exchange resin by, for example, filtering. The amount of the cation exchange resin is preferably no less than an amount required to exchange the alkaline metal included in the solvent. The solvent is subject to dealkalization (demetallation) by the cation exchange resin.

The acid type cation exchange resin may be styrene-based, acrylic-based, or methacryl-based one, and have a replaced sulfonic acid group or carboxyl group as the ion-exchange group, for example. Among them, it is preferable to use, so-called strong acid type cation exchange resin provided with the sulfonic acid group. The cation exchange resin used for the exchange of the alkaline metal can be reused after regeneration process by passing sulfuric acid or hydrochloric acid therethrough.

The prepared silica sol is thereafter gelled, and then which is ripened. In the gelling process and the ripening process, it is preferable to control the pH thereof. Typically, the silica sol after the ion exchange process by the cation exchange resin has a comparatively low pH of, for example, 3 or less. When such a silica sol is neutralized so that the pH thereof is in a pH range of mild acidity to neutrality, the silica sol is gelled. The silica sol can be gelled by controlling the pH thereof into a range of 5.0 to 5.8, and preferably within a range of 5.3 to 5.7. The pH thereof can be controlled by adding base and/or acid. The base may be aqueous ammonia, sodium hydroxide, potassium hydroxide, silicate of alkaline metal, or the like. The acid may be hydrochloric acid, citric acid, nitric acid, sulfuric acid, or the like. The pH-controlled gel is ripened in a stable state. The ripening process may be performed under a temperature in a range of 40 to 80°C for a time period of 4 to 24 hour.

After the ripening process, preferably, the gel is pulverized. Desired aerogel particles **A** can be easily obtained by the pulverization of the gel. The pulverizing process of the gel can be performed, for example, by: putting the gel in a Henshall type mixer or gelling the sol inside the mixer; and operating the mixer at a proper rotating speed for a proper period.

After the pulverizing process, preferably, the solvent substitution process is performed. In the solvent substitution process, the solvent (such as water) used for preparing the gel is substituted for another solvent having small surface tension in order to avoid the occurrence of drying shrinkage when the gel is dried. The solvent substitution process typically includes multiple steps, and preferably, two steps, because it is difficult to directly substitute water for the solvent having small surface tension. A criterion for selecting a solvent used for the first step may include: having good affinity with both water and a solvent used for the second step. The solvent used for the first step may be methanol, ethanol, isopropyl alcohol, acetone or the like, and ethanol is preferable. A criterion for selecting a solvent used for the second step may include: having less reactivity with a treatment agent used in a following hydrophobizing process; and having small surface tension so as to cause less drying shrinkage. The solvent used for the second step may be hexane, dichloromethane, methyl ethyl ketone or the like, and hexane is preferable. An additional solvent substitution step may be performed between the first solvent substitution step and the second solvent substitution step, as needed.

After the solvent substitution process, preferably, the hydrophobizing process is performed. Alkylalkoxysilane, halogenated alkylsilane, or the like can be used for a treatment agent in the hydrophobizing process. For example, dialkyldichlorosilane or monoalkyl trichlorosilane can be used preferably, and dimethildichlorosilane is used more preferably in view of the reactivity and the material cost. The hydrophobizing process may be performed before the solvent substitution process.

After the hydrophobizing process, the obtained gel is isolated from the solvent by filtering, and thereafter the gel is washed to remove the unreacted treatment agent. Thereafter, the gel is dried. The drying process may be performed under the ordinary pressure, and may be performed with heat and/or hot air. The drying process is preferably performed under an inert gas (e.g., nitrogen gas) atmosphere. According to this process, the solvent in the gel is removed from the gel, and thus the aerogel particles A can be obtained.

The aerogel particles **A** obtained by the supercritical drying method and the aerogel particles A obtained based on the liquid glass have basically the same structure. That is, each of them has a particle structure in which silica microparticles are bound together so as to form a three dimensional mesh shape.

Shape of the aerogel particle **A** is not particularly limited, and may be one of various shapes. Typically, the aerogel particles **A** obtained by the above-described method have indeterminate shapes because the aerogel particles **A** are subject to the pulverizing process or the like. They may be, so to say, in rock-shapes having irregular surfaces. They also may be in spherical-shapes, rugby-ball shapes, panel-shapes, flake-shapes, fiber-shapes, or the like. The aerogel particles **A** used for the molding may be a mixture of particles having different particle sizes. The sizes of the aerogel particles **A** are not necessarily in uniform, because the particles are adhered to each other to be unified in the molded product. Regarding the sizes of the aerogel particles **A**, in view of strength, handleability, and ease for molding, it is preferable that excessively large particles and excessively small particles be small in number. Specifically, an average particle size of the aerogel particles **A** preferably falls within a range of 100 µm to 5 mm, and, more preferably, falls within a range of 500 µm to 1.5 mm. In the present specification, an average particle size means a value of the particle size at 50% in a cumulative particle size distribution measured by a laser diffraction scattering method.

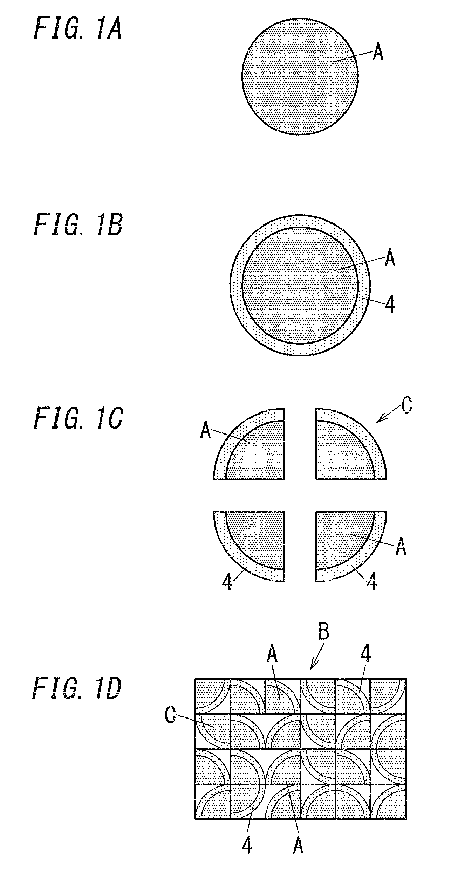

Next, a method for producing a heat-insulating molded article **B** according to the present invention will be described. This method includes: a first step (FIGS. 1A and 1B) for coating outer surfaces of the aerogel particles **A** with adhesive **4**; a second step (FIGS. 1B and 1C) for crushing the aerogel particles **A** coated with the adhesive **4** to obtain pieces of a heat-insulating molding compound **C;** and a third step (FIGS. 1C and 1D) for molding the pieces of the heat-insulating molding compound **C.**

In the first step, as shown in FIGS. 1A and 1B, for coating the aerogel particles **A** with the adhesive **4,** a general granulator or a general coating device may be used. For example, a type of each device may be a rotary container type, a rotary blade type, a fluid type and the like. Any of the above types may be selected depending on the adhesive **4** to be used. Then, predetermined amounts of the aerogel particles **A**, the adhesive **4** and water as necessary are put in a device described above, they are mixed for a predetermined time and then dried, and thereby the aerogel particles **A** coated with the adhesive **4** can be obtained.

Either thermoplastic resin or thermosetting resin, or both of them may be used for the adhesive **4.** Examples of the thermoplastic resin include acrylic resin, polyethylene resin, polypropylene resin, polystyrene resin, nylon resin and the like. These resins may be used alone or in combination. Examples of the thermosetting resin include phenolic resin, melamine resin, polyurethane resin, epoxy resin, silicone resin and the like. These resins may be used alone or in combination.

Preferably, 50% or more of an outer surface of the aerogel particle **A** is preferably coated with the adhesive **4,** and more preferably 80% or more (an upper limit is 100%) of the outer surface is.

A thickness of the adhesive **4** coating the aerogel particle **A** preferably falls within a range of 0.1 µm to 50 µm, and more preferably falls within a range of 0.5 µm to 10 µm.

A content of the adhesive **4** in the heat-insulating molded article **B** is not limited particularly, but for example, falls within a range of 5% to 50% by mass of a total amount of the heat-insulating molded article **B.**

In the second step, as shown in FIGS. 1B and 1C, for crushing the aerogel particles **A** coated with the adhesive **4,** a general crusher may be used. Specifically, the crusher may be, for example, a roller mill, a hammer mill, a roll crusher, a bowl mill, a jet mill and the like. Pieces of the heat-insulating molding compound **C** shown in FIG. 1C can be obtained by crushing the aerogel particles **A** coated with the adhesive **4** by the crusher described above. In this case, it is not required all of the aerogel particles **A** coated with the adhesive **4** are crushed, but may be required at least part of them are crushed. Preferably, 60% or more by mass of a total amount of the aerogel particles **A** coated with the adhesive **4** may be crushed, and more preferably, within a range of 60% to 90% by mass of them may be crushed. Since at least some pieces of the heat-insulating molding compound **C** are formed as a result of crushing, surfaces of the aerogel particles **A** which are not coated with the adhesive **4** are newly exposed. It is preferable that an average particle size of the heat-insulating molding compound **C** (including the thickness of the adhesive **4**) falls within a range of 1/10 to 1/2 relative to the average particle size of the aerogel particles **A**, which have not been crushed yet as raw material. Because the average particle size of the heat-insulating molding compound **C** is 1/10 or more of the average particle size of the aerogel particles **A,** it is possible to suppress impairing of the handleability and moldability. Because the average particle size of the heat-insulating molding compound **C** is 1/2 or less of the average particle size of the aerogel particles **A**, a so-called heat bridge is less likely to be formed, which can suppress impairing of the thermal insulating properties.

Next, in the third step, as shown in FIGS. 1C and 1D, for molding the heat-insulating molding compound **C,** a molding method may be, for example, compression molding, transfer molding, injection molding, extrusion molding and the like. Any of the above molding method may be selected depending on the adhesive **4** to be used and a shape of the heat-insulating molded article **B** to be produced.

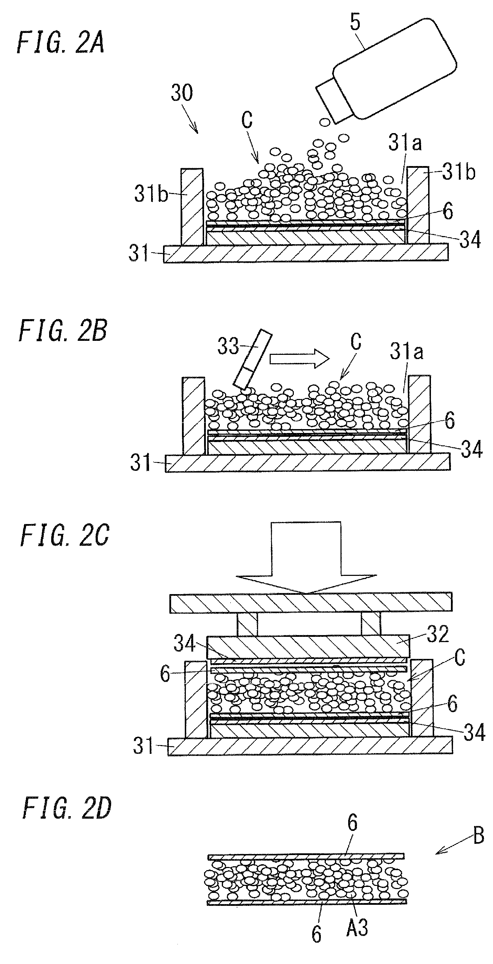

An example of the third step is shown in FIGS. 2A to 2D. Firstly, pieces of the heat-insulating molding compound **C** are uniformly mixed in a bottle **5** as necessary. Next, a pressing machine **30** is used for molding the heat-insulating molding compound **C.** The pressing machine **30** includes a press lower mold **31** and a press upper mold **32**.

Then, as shown in FIG. 2A, a side wall mold **31b** is attached to the press lower mold **31** so as to form a recess **31a.** A release sheet **34** is put on a bottom face of the recess **31a,** and a surface sheet **6** is then put thereon. Next, pieces of the heat-insulating molding compound **C** are introduced from the bottle **5** into the recess **31a** above the press lower mold **31.** In this time, it is preferable that the press lower mold **31** is preheated up to a curing temperature of the adhesive **4** or less by heating.

Next, as shown in FIG. 2B, a top plane of the introduced pieces is flattened by a smoother **33** such as a medicine spoon, a paddle and the like. Thereafter, another surface sheet **6** is put on the pieces of the heat-insulating molding compound **C** of which the top plane is flattened, and then another release sheet **34** is put thereon.

Thereafter, the press upper mold **32** is introduced into the recess **31a** from an upper side, and then pressing is conducted with heat and pressure, as shown in FIG. 2C. By this pressing, the adhesive **4** exerts the adhesive properties and thus the pieces of the heat-insulating molding compound C are bonded to be integrated. Moreover, each of the surface sheets **6** is glued to the pieces of the heat-insulating molding compound **C** by the adhesion of the adhesive **4** and thus the surface sheets **6** are integrated with the molded product of the heat-insulating molding compound **C.** After completion of pressing, the resultant product is taken out therefrom, and dried by a drying machine.

As a result, the heat-insulating molded article **B** constituted by the molded product of the heat-insulating molding compound C (aerogel layer **A3**) and the surface sheets **6** is obtained, as shown in FIG. 2D. Note that, for enhancement of adhesiveness of the surface sheet **6** and the aerogel layer **A3,** an additional adhesive **4** may be introduced to an interface between the not cured aerogel layer **A3** and the surface sheet **6.**

The heat-insulating molded article **B** described above is formed as a thermal insulating board shaped like a plate. Note that, by molding with a proper molding tool or the like, the heat-insulating molded article **B** can be formed into a shape other than a board shape. The heat-insulating molded article **B** has a structure in which the surfaces sheets **6** are respectively placed on opposite surfaces of the aerogel layer **A3** formed of bonded pieces of the heat-insulating molding compound **C.** By covering the aerogel layer **A3** with the surface sheet **6,** it is possible to increase the strength of the heat-insulating molded article **B.** For example, a resin sheet, a fiber sheet, a resin impregnated fiber sheet and the like may be used as the surface sheet **6.** In a case where the surface sheet **6** contains resin, by bonding and integrating the surface sheet **6** and the aerogel layer **A3** by the resin of the surface sheet **6,** it is possible to further improve adhesiveness of the aerogel layer **A3** and the surface sheet **6.** Note that the surface sheet **6** may be placed on only one surface of the aerogel layer **A3**. Also, the heat-insulating molded article **B** may be constituted by the aerogel layer **A3** on which the surface sheet **6** is not placed. However, for increase of strength, it is preferable that the surface sheets **6** are placed on opposite surfaces of the aerogel layer **A3.**

Regarding the heat-insulating molded article **B** obtained by the above described way, as shown in FIG. 1D, part of an outer surface of a piece of the heat-insulating molding compound **C** is not coated with the adhesive **4**. Therefore, the adhesive **4** exists discontinuously. Because the adhesive **4** conducts heat well, the so-called heat bridge is likely to be formed. However, forming the heat bridge can be inhibited by the adhesive **4** that exists discontinuously in the aerogel layer **A3.** As a result, superior thermal insulating properties can be obtained. Note that pieces of the heat-insulating molding compound **C** are placed in order in FIG. 1D for convenience of explanation, but in the actual heat-insulating molded article **B,** the pieces of the heat-insulating molding compound **C** are usually placed in a disorderly way.

Moreover, although part of a piece of the heat-insulating molding compound **C** may not be coated with the adhesive **4,** pieces of the heat-insulating molding compound **C** can be mutually adhered by the adhesive **4** that coats remaining parts of the pieces of the heat-insulating molding compound **C,** therefore, higher strength can be obtained. According to the present invention, it is possible to obtain the heat-insulating molded article **B** which is higher in strength and is excellent in thermal insulating properties. The heat-insulating molded article **B** may be suitable for use as building material and the like.

### EXAMPLES

The present invention will hereinafter be explained specifically with reference to Examples.

[Producing method of aerogel particles]

Prepared were tetramethoxysilane oligomer ("Methyl Silicate 51", available from COLCOAT CO., Ltd, of which average molecular weight is 470) as alkoxysilane, ethanol (special grade reagent, available from nacalai tesque, inc.) and water as solvent, and aqueous ammonia of 0.01 mol/l as catalyst. Compounded were 1 mol of the tetramethoxysilane oligomer, 120 mol of the ethanol, 20 mol of the water and 2.16 mol of the aqueous ammonia to produce a sol-like reaction liquid.

Thereafter, the above sol-like reaction liquid was put in a bottle and then left at ordinary temperature to be gelled to produce a gelled compound.

The above gelled compound was then put in a pressure proof vessel filled with liquefied carbon dioxide with the temperature of 18°C and the pressure of 5.4 MPa (55 kgf/cm²), and replacement of the ethanol in the gelled compound by carbon dioxide was conducted for three hours. Thereafter, the temperature and the pressure of the inside of the pressure proof vessel were adjusted to fulfill a supercritical condition of carbon dioxide where the temperature was 80°C and the pressure was 16 MPa (160 kgf/cm²), and then removal of the solvent was conducted for 48 hours. 0.3 mol/l of hexamethyldisilazane as hydrophobizating agent was added to the atmosphere under the supercritical condition, and the hydrophobizating agent was dispersed in the supercritical fluid for two hours, and the gelled compound was remained in the supercritical fluid to be hydrophobized. Thereafter, supercritical carbon dioxide was drained and the pressure of the inside of the vessel was reduced, and thereby the ethanol and the hydrophobizating agent were removed from the gelled compound. It took 15 hours from the time of start of adding the hydrophobizating agent to the time of completion of reducing the pressure. The aerogel particles (silica aerogel particles) were taken out of the pressure proof vessel. The silica aerogel particles had a bulk density of 0.086 g/cm³, and an average particle size of 700 µm.

### [Coating method with adhesive]

Phenolic resin ("Phenol for industrial applications SP1103", available from ASAHI ORGANIC CHEMICALS INDUSTRY CO., LTD.) and acrylic resin ("Vinyblan 2687", available from SHIN-ETSU CHEMICAL CO., LTD.) were prepared as an adhesive.

Then, 8.5 g of the aerogel particles, 0.75 g of the phenolic resin, 2.5 g of the acrylic resin and 3 g of water were put in a rotary container type coating device ("Rocking Mixer RM-10", available from AICHI ELECTRIC CO., LTD.), stirred for 10 minutes, and then dried. Thereby, the aerogel particles coated with the adhesive were obtained. Regarding the aerogel particles obtained in such the way, the adhesive covered 80% or more of the outer surface of the aerogel particle. Note that a thickness of the adhesive coating the aerogel particle was 1 µm.

### [Crushing method of aerogel particles]

The aerogel particles coated with the adhesive were crushed by a roller mill ("EXAKT M-50", available from NAGASE SCREEN PRINTING RESEARCH CO., LTD.), and thereby pieces of heat-insulating molding compound were obtained. An average particle size of the heat-insulating molding compound was approximately 300 µm.

### [Method for molding heat-insulating molding compound]

Pieces of the heat-insulating molding compound were homogenously mixed in a bottle. Thereafter, by molding the mixed pieces with a pressing machine under a condition where a mold temperature was 180°C and a pressing time was 20 minutes, a board shaped heat-insulating molded article was produced. Thermal conductivities of the heat-insulating molded article obtained in such the way was 0.016 W/m·K. The measurement of the thermal conductivities was conducted in accordance with "JIS A1412-1 Test method for thermal resistance and related properties of thermal insulations". Note that the strength of the heat-insulating molded article is sufficient to be used as building material and the like, specifically, the strength measured by a three-point bending test was 0.06 MPa. The three-point bending strength was measured in accordance with "JIS K 7221-2 Rigid cellular plastics Determination of flexural properties".

### (Comparative Example 1)

### [Producing method of aerogel particles]

The aerogel particles were produced in the same manner as the Example 1.

### [Coating method with adhesive]

The aerogel particles coated with the adhesive were obtained in the same manner as the Example 1.

### [Method for molding aerogel particles]

Without crushing the aerogel particles coated with the adhesive, the aerogel particles coated with the adhesive were molded with the pressing machine under the condition where the mold temperature was 180°C and the pressing time was 20 minutes, and thereby a board shape heat-insulating molded article was produced. The strength of the heat-insulating molded article obtained in such the way, measured by the three-point bending test, was 0.06 MPa. The thermal conductivities of the article was 0.017 W/m·K.

### REFERENCE SIGNS LIST

**A:** aerogel particle
**B:** heat-insulating molded article
**C:** heat-insulating molding compound
4: adhesive

## Claims

1. A piece of a heat-insulating molding compound prepared by crushing an aerogel particle coated with adhesive.

2. A heat-insulating molded article molded from pieces of the heat-insulating molding compound each according to claim 1.

3. A production method for a heat-insulating molded article, comprising:
coating aerogel particles with adhesive to prepare coated aerogel particles;
crushing the coated aerogel particles to obtain pieces of a heat-insulating molding compound; and
molding the pieces of the heat-insulating molding compound.
